Europäisches Patentamt

European Patent Office

Office européen des brevets

(11) Publication number : **0 597 729 A1**

(12) **EUROPEAN PATENT APPLICATION**

(21) Application number : 93309079.7

(22) Date of filing : 12.11.93

(51) Int. Cl.⁵ : **G06F 12/08**

(30) Priority : 13.11.92 US 975783
13.11.92 US 975804

(43) Date of publication of application :
18.05.94 Bulletin 94/20

(84) Designated Contracting States :
CH DE ES FR GB IE IT LI NL

(71) Applicant : CYRIX CORPORATION
2703 N. Central Expressway
Richardson, Texas 75080 (US)

(72) Inventor : Byrne, Jeffrey S.
2816 Capella Circle
Garland, Texas 75044 (US)
Inventor : Courtright, David A.
2671 Honeysuckle
Richardson, Texas 75082 (US)

Inventor : Duschatko, Douglas Ewing
3512 Harpers Place
Plano, Texas 75075 (US)
Inventor : Herubin, Margaret R.
540 Edinburg Lane
Coppell, Texas 75019 (US)
Inventor : Martinez, Marvin Wayne, Jr.
3528 Omar Lane
Plano, Texas 75023 (US)
Inventor : Bluhm, Mark
2711 Brookshire Drive
Carrollton, Texas 75007 (US)
Inventor : Garibay, Raul A., Jr.
333 Melrose, No. 3-B
Richardson, Texas 75080 (US)
Inventor : Quattromani, Marc A.
710 Willow Brook
Allen, Texas 75002 (US)

(74) Representative : Harris, Ian Richard et al
c/o D. Young & Co., 21 New Fetter Lane
London EC4A 1DA (GB)

(54) **Method of allowing write-back caching in a write-through environment.**

(57)    A processor having a cache memory which supports both write-through and write-back cache protocols, a control register for storing cache control information and locking circuitry for preventing one or more portions of the cache control information from being overwritten. The locking circuitry is controlled by a signal stored in a configuration register. The processor may be selectively enabled to perform one or both of the cache protocols responsive to a signal (hardwired or memory stored) on the processor circuit. Fault generating circuitry generates faults responsive to the status bits stored in the control registers, the hardwired control signal and the new data to be written to the control register.

FIG. 4

EP 0 597 729 A1

This application is related to a co-pending U. S. Patent Application Ser. No. 07/976,366, titled "Coherency for Write-Back Cache In A System Designed For Write-Through Cache", filed November 13, 1992, and assigned to the assignee of this application.

The invention relates generally to data processors, e.g. integrated circuit, and more particularly to a method of allowing a data processor capable of operating in computer (hardware/software) systems supporting either or both write-through or write-back cache operations.

Cache memory designs support either or both of two basic write policies: write-through or write-back. In write-through mode, each write to a cache line is followed by an external bus cycle to write the corresponding block of main memory -- as a result, the cache and main memory always have the same data. In write-back mode, write hits to the cache do not automatically cause an external bus cycle, but rather, main memory is updated only upon replacement, invalidation, or inquiry (write-back without replacement or invalidation) of a cache line containing "dirty" data -- data is characterized as "clean" or "dirty" depending on whether the data in the cache is different from that in the main memory.

Without limiting the scope of the invention, this background information is provided in the context of a specific problem to which the invention has application. Many computer systems employ an Intel 486 microprocessor that although using an NW bit in the control register for selecting between cache write-through and write-back modes, supports only a write-through mode of operation and does not support write-back operations. Thus, the NW bit must be set to write-through mode (along with the appropriate setting for the CD bit) for normal cache-enabled operations. The microprocessor will generate a general protection (GP) fault if the software attempts to set the NW bit to write-back mode during cache-enabled operations.

Parenthetically, the Intel microprocessor does support the use of the cache in a "scratch-pad" mode by setting the CD (cache disabled) bit in the control register to cache-disabled, and the NW bit to write-back mode -- the cache can be used in this scratch-pad mode and writes to the cache will not result in external bus cycles (as they would for write-through cache operations) but any data in the cache would have to be invalidated if normal cache operations are enabled (i.e., CD set to cache-enabled, and NW set to write-through).

Write-back cache designs can provide significant performance advantages over write-through designs because of the reduction in memory bandwidth requirements -- fewer external bus cycles are required because not all writes to the cache result in corresponding writes to main memory.

Accordingly, one object of the invention is to enable a microprocessor to be used in computer systems configured either for write-back or write-through caching, and in the latter case, function compatibly with microprocessors that do not support a cache write-back mode.

Various aspects of the invention are set out in independent claims 1, 10, 16 and 20. Preferred features and other aspects of the invention are set out in the dependent claims.

One embodiment of the invention, as implemented in a logic device that includes or controls cache memory, is a write-back cache configuration method that involves: (a) in a computer system configured for write-back caching, inhibiting software (or hardware) from inadvertently placing the cache in write-through mode (such as by setting an NW control bit to write-through in switching to cache-enabled operation), and (b) in a computer system configured for write-through caching, operating in a manner with normal write-through caching (such as issuing a general protection fault if software attempts to erroneously set the NW control bit to write-back mode).

The technical advantages of an embodiment of the invention include the following. The write-back configuration method permits 486-based computer systems to obtain the performance advantages offered by write-back caching, while maintaining compatibility with existing 486-type microprocessor designs that do not support write-back caching. In particular, a 486-type microprocessor implements the write-back configuration method using a LOCK NW cache configuration bit to prevent alteration of the NW bit. When the NW bit is set for write-through mode and the LOCK_NW bit is set to prevent alteration of the NW bit, the microprocessor operates in 486-compatible mode, generating a GP fault if the software inadvertently attempts to set the NW control bit to write-back. When NW is set for write-back mode and LOCK_NW is set to prevent alteration of the NW bit, the microprocessor inhibits the software from inadvertently switching the NW bit.

For a more complete understanding of the invention, and for further features and advantages, reference is now made to the detailed description of an exemplary embodiment of the invention, together with the accompanying drawings, it being understood that modifications or alternative embodiments can be provided within the scope of the invention.

In the drawings:

FIGURE 1 is a block diagram of a microprocessor;

FIGURE 2 illustrates a representation of pertinent portions of a control register CR0 in the microprocessor of FIGURE 1;

FIGURE 3 is a simplified block diagram illustrating control of the cache memory in FIGURE 1; and

FIGURE 4 is a block diagram of cache control logic included in FIGURE 1 for implementing an embodiment of the invention.

The detailed description of an exemplary embodiment of the write-back configuration method and implementation is organized as follows:

    1.0 Microprocessor
    2.0 Write-Back Configuration Method
    3.0 Hardware Implementation
    3.1 Configuration and Control Registers
        -- CR0 -- PG, CD, NW, PE
        -- CC1 -- LOCK NW
    3.2 Cache-Mode Control Logic
    4.0 Conclusion

This organizational outline, and the corresponding headings used in this Detailed Description, are provided for convenience of reference only.

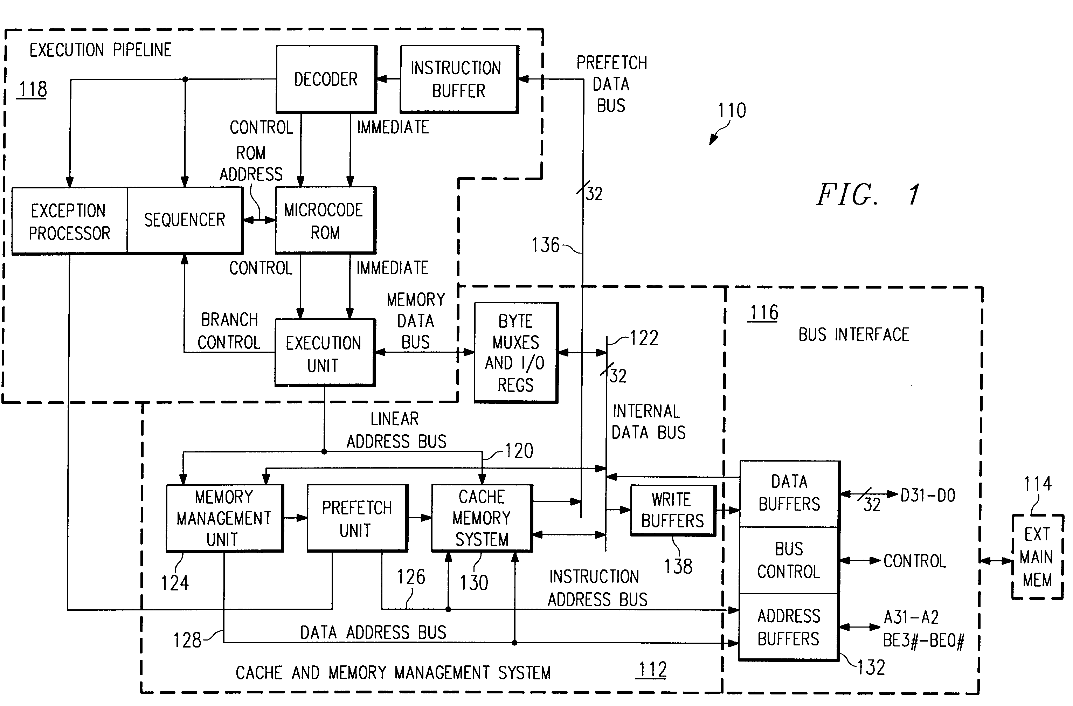

An embodiment of the invention will be discussed in the context of an exemplary microprocessor system shown in Figure 1 compatible with a 486-bus architecture. The 486-bus architecture together with relevant signal descriptions are described in greater detail in AGARWAL, Rakesh K., *80x86 Architecture and Programming*, Prentice-Hall, 1991. The invention, as described and claimed herein, is adaptable to other processor architectures as would be apparent to one skilled in the art.

1.0 Microprocessor

Figure 1 illustrates an exemplary implementation of a microprocessor in which a cache configuration controller embodying the invention may be employed. The microprocessor chip is generally designated by reference numeral 110 and includes a cache and memory management system 112. The microprocessor 110 is coupled to an external main memory 114 via bus interface 116. Execution pipeline 118 decodes and executes instructions. The execution pipeline 118 outputs linear (virtual) addresses over an internal linear address bus 120, while data transfers occur over an internal data bus 122.

The cache and memory management system 112 includes a memory management unit (MMU) 124 which converts linear addresses to physical addresses for output over separate internal instruction and data address buses 126 and 128. The physical addresses are provided to both (a) the cache memory system 130, and (b) to address buffers 132 which interface to an external address bus for signals A31-A2 and BE3#-BE0#.

The cache memory system 130 includes a cache and a cache control system. The cache control system receives physical addresses off the internal instruction and data bus address buses 126 and 128 (together with the lower order bits of the linear address which are not translated in the MMU) . In addition, the cache control system is able to receive data from the internal data bus 122 which is coupled to the bus interface data buffers by write buffers 138. A prefetch data bus is coupled between the instruction buffer and the cache memory system 130.

The exemplary cache is a 2K byte unified (instruction and data) cache with 128 cache lines of 8 bytes each. The caching protocol may be either write-through or write-back, as configured by the system programmer. The cache is organized conventionally as four-way set associative and its operation also is conventional.

2.0 Write-Back Configuration Method

An exemplary write-back configuration method embodying the invention is implemented in a 486-type microprocessor (illustrated in FIGURE 1) designed for installation in a computer system using the 80x86 architecture (such as the 80486 architecture) The computer system can be a conventional design that either (a) only supports operation of the internal microprocessor cache in write-through mode notwithstanding the inclusion of an NW write-through/write-back control bit in the CR0 control register, or (b) is designed to support (alternatively or additionally) operation of the microprocessor in write-back mode. In the latter case, the computer system implements a write-back protocol and this Detailed Description is concerned with so much of that protocol that is involved with the functioning of the NW control bit.

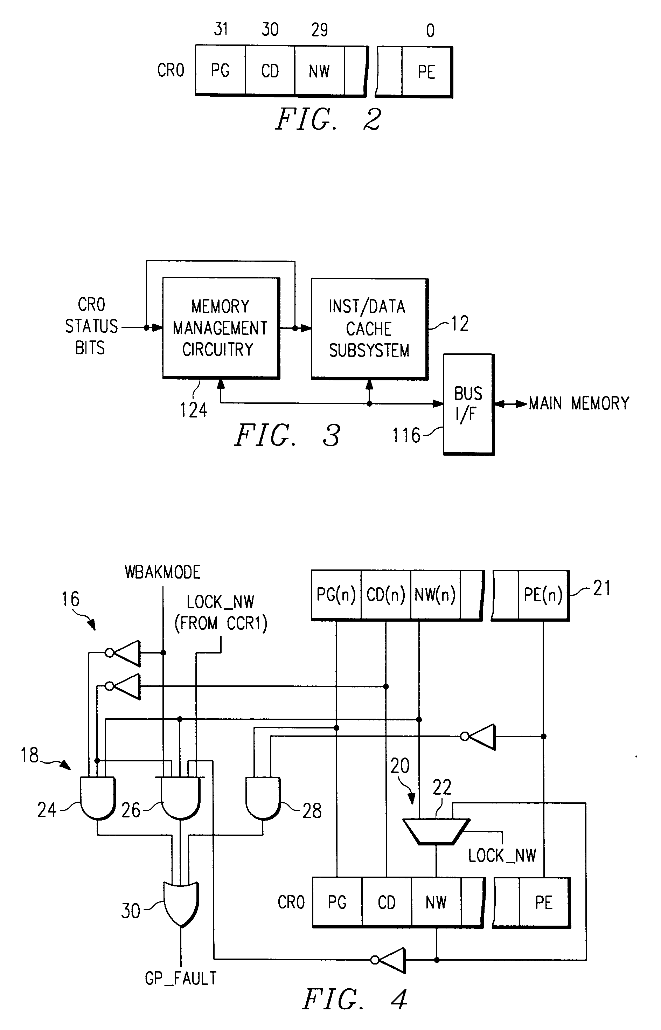

The microprocessor 110 includes a CR0 control register, shown in FIGURE 2, which stores a plurality of control flags which control operating modes and indicate the general state of the processor. The lower sixteen bits of CR0 are referred to as the machine status word (MSW). The CR0 contents may be modified using the MOV instruction. Typically, only the basic input/output system (BIOS) will alter the register's contents; however, it is possible that other system software may also write to CR0.

If a microprocessor having write-back capabilities is used in a computer system incorporating a BIOS (or other program) which does not contemplate a selection of caching protocols through a control register (such as CR0), then the BIOS (or other program) may inadvertently switch the NW control bit from write-back to write-through mode

A microprocessor embodying the invention includes a cache configuration register enabling the microprocessor to support either a write-through or a write-back cache operational mode. Locking circuitry is provided to prevent inadvertent switching between the two modes during operation of the microprocessor while permitting user, e.g. programmer, controlled selection of either mode. In the write-through mode, with write-back mode disabled, the microprocessor operates compatibly with a corresponding microprocessor without write-back capabilities (e.g. an Intel 808486 processor in the exemplary embodiment). However, by updating the contents of the cache configuration register, the same microprocessor can readily be enabled to support a write-back cache operational mode. Thus, in the specific embodiment being described, the same processor can be used to provide 486-type functionality in a write-back as well as in a write-through cache environment.

3.0 Hardware Implementation

3.1 Configuration and Control Registers

FIGURE 2 illustrates a representation of the CR0 register, showing the location of status bits relevant to implementation of this embodiment of the invention. The illustrated status bits are described in greater detail in Table 1.

TABLE 1

| CR0 Bit Definitions | | |
|---|---|---|
| Bit Position | Name | Function |
| 0 | PE | Protected Mode Enable. This control bit enables the segment-based protection mechanism. If PE=1, protected mode is enabled. If PE=0, the processor operates in real mode, with segment-based protection disabled, and addresses are formed as in an 8086-class processor. |
| 29 | NW | Cache-protocol selector. IF NW=1, then write-back cache protocol is selected. IF NW=0, then write-through cache protocol is selected. |
| 30 | CD | Cache disable. If CD=1, no further cache fills occur. However, data already present in the cache continues to be used if the requested address hits in the cache. The cache must also be invalidated to completely disable any cache activity. If CD=0, the cache filling is enabled. |
| 31 | PG | Page enable bit. If PG=1 and protected mode is enabled (PE=1), paging is enabled. If PE=0, then paging is disabled. |

As shown in FIGURE 3, memory management unit 124 and a cache control subsystem 12 (included in the cache control system of the cache memory system 130) control memory access through the bus interface 116 in response to control bits stored in the register CR0 (and other control bits).

In order to provide compatibility with the Intel 80486 processor, the processor embodying the present invention that is being described, uses two additional control signals: WBAKMODE (Write Back Mode) and LOCK_NW (Lock cache protocol). The LOCK_NW signal is stored in a separate control register (CCR1) in the microprocessor 110 which would not normally be written to by a BIOS or other program which was not aware of the processor's write-back cache protocol. In other words, programs written for an Intel 80486 processor would not know of the location of the CCR1 register, and therefore, this register would not be written to by programs which are expecting a non-write-back-enabled processor.

The WBAKMODE signal, in the preferred embodiment, is hardwired into the processor at the time of manufacture, although it could be stored in a memory. The WBAKMODE = 0 signal forces the processor to emulate the operation of the Intel 80486 with regard to the cache protocol (Table 2) while a WBAKMODE = 1 signal allows the enhanced write-back cache protocol to be used (Table 3). Thus, a single processor design may be used to supply either compatible (non-write-back-enabled) caching features or enhanced (write-back-enabled) caching features under control of the LOCK_NW signal, simply by setting the WBAKMODE signal to an appropriate logic level as will be described below.

TABLE 2

| Cache-Modes for WBAKMODE = 0 | | |
|---|---|---|
| CD | NW | MODE |
| — | | |
| 0 | 0 | Write-Through mode with allocation |
| 0 | 1 | General Proctection Fault |
| 1 | 0 | Write-Through mode with no new line allocations |
| 1 | 1 | Scratch-pad mode |

Table 2 illustrates the cache mode for a processor with WBAKMODE = 0, i.e, having the write-back mode disabled. If CD = 0 and NW = 0, the processor performs the normal write-through caching protocol. If CD = 0 and NW = 1, a general protection fault is generated. The microprocessor exception processor handles the general protection fault. If CD = 1 and NW = 0, the cache memory is in a write-through mode with no new line allocations. In other words, the cache is not updated on a read miss. If CD = 1 and NW = 1, the cache is in a "scratch-pad" mode, as used in the Intel 80486 processor. If WBAKMODE=0, then LOCK_NW is "0" and cannot be changed.

TABLE 3

| Cache-modes for WBAKMODE = 1 | | |
|---|---|---|
| CD | NW | MODE |
| — | | |
| 0 | 0 | Write-through mode with allocation |
| 0 | 1 | Write-back mode with allocation |
| 1 | 0 | Write-through mode with no new line allocation |
| 1 | 1 | Write-back mode with no new line allocation |

Table 3 indicates the cache mode for WBAKMODE = 1. If CD = 0 and NW = 0, then the cache is in a write-through mode with allocation. If CD = 0 and NW = 1, the cache is in a write-back mode with allocation. If CD = 1 and NW = 0, the cache is in a write-through mode with no new line allocation. If CD = 1 and NW = 1, the cache is in a write-back mode with no new line allocation.

3.2 Cache-Mode Control Logic

An example of cache-mode configuration control logic incorporated in the microprocessor 110 to implement the invention is illustrated in FIGURE 4 . The control logic 16 includes fault generating circuitry 18 for generating general protection faults GP_FAULT under predetermined conditions, which are input to the EXCEPTION PROCESSOR in FIGURE 1, and blocking circuitry 20 for preventing inadvertent writes to the NW bit of register CR0.

To write to the CR0 register, the desired configuration status word is stored in a latch 21. The status bits in latch 21 are distinguished from the corresponding status bits in CR0 by the suffix "(n)". Upon writing, in response to the MOV instruction to CR0, the contents of CR0 are replaced with the contents of latch 21. The locking circuitry 20, shown in FIGURE 3 as a multiplexer 22, selectively writes either NW(n) or NW (the value currently in the NW status bit) to control register CR0, depending on the value of LOCK_NW. If LOCK_NW = 1, the NW status bit is not updated (i.e., the current value is restored). If LOCK_NW = 0, then the new value, NW(n), is written into the corresponding bit of CR0. As previously stated, the LOCK_NW control signal emanates from cache control register CCR1. Hence, a programmer can set the NW bit to a desired value and set the LOCK_NW bit to "1" in order to prevent inadvertent rewriting of the NW bit. If an intentional change in the value of the NW bit is desired, the LOCK_NW bit may be set to "0", which will allow the value of NW(n) to pass to the NW status bit of CR0.

Hence, the locking circuitry allows the programmer to design a program which can change the value of the NW status bit, but prevent inadvertent changing of the bit by other programs.

The fault generating circuitry 18 generates a fault GP_FAULT which indicate an illegal condition in the CR0 register. What constitutes an illegal condition will be dependent upon whether the processor is enabled for write-back mode. Fault generating circuitry 18 comprises AND gates 24, 26 and 28 connected to receive inputs from the latch 21; each AND gate has an output coupled to OR gate 30. AND gate 24 receives $\overline{\text{WBAKMODE}}$, $\overline{\text{CD}}$(n) and NW(n) as inputs. AND gate 26 receives WBAKMODE, $\overline{\text{CD}}$(n), NW(n), $\overline{\text{NW}}$, and LOCK_NW. AND gate 28 receives PG(n) and $\overline{\text{PE}}$(n). Consequently, the logic definition of the GP_FAULT signal (see general protection fault signal) can be described as

$$(\overline{W}\,\overline{B}\,\overline{A}\,\overline{K}\,\overline{M}\,\overline{O}\,\overline{D}\,\overline{E} \cdot \overline{C}\,\overline{D}\,(n) \cdot N\,W\,(n)) \quad +$$
$$(\text{WBAKMODE} \cdot \overline{\text{CD}}(n) \cdot \text{NW}(n) \cdot \overline{\text{NW}} \cdot \text{LOCK\_NW}) + (\text{PG}(n) \cdot \overline{\text{PE}}(n))$$

In words, GP_FAULT can be described as follows. If WBAKMODE = 0, indicating that the part is not a write-back protocol processor, a general protection fault will be generated if the CD(n) status bit is set to "0" and the NW(n) status bit is set to "1". If WBAKMODE = 1, a general protection fault will be generated if the CD(n) bit is set to "0", the NW bit is "0", the NW(n) bit is set to "1" and the LOCK_NW bit is "1". Regardless of the value of WBAKMODE, a general protection fault will be generated if the PG(n) bit is set to "1" and the PE(n) bit is set to "0". In the case where WBAKMODE is set to "0", the generation of the GP_FAULT signal is identical to the generation provided in the Intel 80486 processor. Hence, compatibility is preserved with a non-write-back-enabled processor.

4.0 Conclusion.

Although the Detailed Description of the Invention has been directed to certain exemplary embodiments, various modifications of these embodiments, as well as alternative embodiments, will be suggested to those skilled in the art. For example, the invention has general applicability to other data processing devices where control is necessary to prevent inadvertent over-writing of memory contents. The implementation of the locking circuitry 20, for example, could be performed using logic other than the multiplexer 22. While the locking circuitry shown herein is limited to a single bit of CR0, in other implementations additional bits may be controlled by the locking circuitry. If multiple bits are controlled, separate signals (counterparts of LOCK_NW) could be used to independently control each bit, using respective multiplexers, or a common signal could be used. Further, the logic performed by the fault generating circuitry 18 could be performed using other logic implementations.

**Claims**

1. A method of controlling functional features of a data processor cache, comprising the steps of:
   configuring predetermined ones of said functional features according to stored control information;
   reconfiguring at least one of the predetermined ones of said functional features by replacing at least some of said stored control information with updating control information; and
   selectively locking or unlocking said stored controlled information corresponding to at least one of said functional features alternatively to prevent or to permit reconfiguration of said at least one feature.

2. The method of Claim 1, wherein said at least one functional feature comprises a cache write policy (protocol).

3. The method of Claim 2, wherein said updating information for said cache write policy feature alternatively provides a write-through cache policy or a write-back cache policy.

4. The method of Claim 2, and wherein the stored control information corresponding to said cache write policy feature is unlocked to permit reconfiguration by said updating control information.

**5.** The method of Claim 4, wherein said cache write policy feature can be updated to a write-through policy or a write-back policy by said updating control information.

**6.** The method of Claim 2, wherein said cache write policy is a write-through cache policy, and the stored control information corresponding to said write-through cache policy feature is locked to prevent reconfiguration by said updating control information.

**7.** The method of any preceding claim, further comprising the step of generating at least one fault signal in response to predetermined conditions of said updating control information.

**8.** The method of Claim 5, comprising the step of generating a fault signal in response to a first set of predetermined conditions when said updating control information corresponds to said write-through cache policy, and in response to a second set of predetermined conditions when said updating control information corresponds to said write-back cache policy.

**9.** The method of any preceding claim, wherein said selective locking and unlocking are controlled by a stored signal.

**10.** A data processor including a cache control circuitry comprising:
a first memory to store control information to configure predetermined functional features of a cache;
a second memory to store updating control information;
coupling paths between said second memory and said first memory to permit transfer of said updating control information from said second memory to said first memory, and
at least one of said coupling paths including locking circuitry selectively operable to prevent or to permit said transfer of updating control information corresponding to at least one of said functional features.

**11.** The data processor of Claim 10, wherein said at least one functional feature is a cache write policy feature.

**12.** The data processor of Claim 11, wherein said control information corresponding to said write policy feature alternatively provides for a write-through cache policy or a write-back cache policy.

**13.** The data processor of any of Claims 10-12, further including fault signal logic coupled to receive inputs from said second memory to generate a fault signal in response to predetermined conditions of said updating control information.

**14.** The data processor of Claim 12, further including fault signal logic having inputs coupled to said second memory to generate a fault signal in response to predetermined conditions of said updating control information, said fault signal logic having further inputs to receive signals to determine different sets of said predetermined conditions under which said fault signals are generated.

**15.** The data processor of Claim 14, wherein said locking circuitry is connected to be operable by a control signal which is also applied to at least one of said further inputs of said fault signal logic.

**16.** A microprocessor including a cache control circuitry comprising:
a register including bit locations to store control bits to configure predetermined functional features of a cache;
a latch including bit locations to store updating control bits, corresponding to respective control bit locations in said register;
coupling paths between corresponding bit locations in said register and said latch to permit transfer of said updating control bits from said latch to said register, and
at least one of said coupling paths including locking circuitry selectively operable to prevent or to permit said transfer of updating control bits corresponding to at least one of said functional features.

**17.** The microprocessor of Claim 16, further including fault signal logic coupled to receive inputs from bit locations of said latch to generate a fault signal in response to predetermined conditions of said updating control bits.

**18.** A microprocessor according to Claim 16, wherein said locking circuitry comprises a multiplexer having a first input connected to a bit location of said latch corresponding to said at least one functional feature, and a second input connected to the corresponding bit location in said register, and an output coupled to a bit location of said register corresponding to said at least one functional feature, said multiplexer including a control input to receive a control signal to select which of said first and second inputs communicates with the multiplexer output.

19. The data processor of Claim 18, further including fault signal logic having inputs coupled to bit locations of said latch to generate a fault signal in response to predetermined conditions of said updating control bits, said fault signal logic having further inputs to receive signals to determine different sets of said predetermined conditions under which said fault signals are generated, and wherein said locking circuitry is connected to be operable by a control signal which is also applied to at least one of said further inputs of said fault signal logic.

20. A microprocessor including a cache control system comprising:
   means for alternatively selecting either a write-back caching protocol or a write-through caching protocol; and
   means for switching between selection of said protocols.

21. The microprocessor of Claim 20, including means for selectively locking said means for switching to prevent switching a selected protocol.

FIG. 1

EP 0 597 729 A1

FIG. 2

FIG. 3

FIG. 4

EP 0 597 729 A1

**European Patent Office**

## EUROPEAN SEARCH REPORT

Application Number

EP 93 30 9079

### DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | EP-A-0 325 420 (ADVANCED MICRO DEVICES)<br><br>* abstract *<br>* column 22, line 30 - line 50 *<br>* column 18, line 61 - column 19, line 20 *<br>--- | 1-13,16,<br>17,20,21 | G06F12/08 |
| X | EP-A-0 428 149 (MATRA DESIGN SEMICONDUCTOR) | 20 | |
| A | * column 11, line 32 - line 41 *<br><br>----- | 1-3,<br>10-12 | |

TECHNICAL FIELDS
SEARCHED (Int.Cl.5)

G06F

The present search report has been drawn up for all claims

| Place of search | Date of completion of the search | Examiner |
|---|---|---|
| THE HAGUE | 7 March 1994 | Nielsen, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

11